# EUROPEAN PATENT APPLICATION

(11) **EP 4 617 424 A1**
(43) Date of publication of application: **17.09.2025**
(21) Application number: 25160491.4
(22) Date of filing: 27.02.2025
(51) Int. Cl.: D06P 5/30, D06P 1/44, D06P 1/52, D06P 1/653, D06P 5/00

(54) **INK SET, LIQUID DISCHARGE APPARATUS, AND LIQUID DISCHARGE METHOD**

(30) Priority: 11.03.2024 JP 2024037391
(71) Applicant: Ricoh Company, Ltd., Tokyo 143-8555 (JP)
(72) Inventor: Kobayashi, Hiroki, Tokyo, 143-8555 (JP); Nakagawa, Tomohiro, Tokyo, 143-8555 (JP); Hyakutake, Daiki, Tokyo, 143-8555 (JP)
(74) Representative: Marks & Clerk LLP

(57) **Abstract**

An ink set for fabric printing is provided that includes an aqueous ink and a pretreatment liquid. The aqueous ink includes a pigment. The pretreatment liquid includes an organic acid and an amino-modified silicone. The organic acid has a pKa at 25°C of 2.5 or more and less than 5.0, and a content of the organic acid in the pretreatment liquid is 5% by mass or more and 20% by mass or less. A content of the amino-modified silicone in the pretreatment liquid is 1% by mass or more and less than 15% by mass.

## Description

### BACKGROUND

### Technical Field

The present disclosure relates to an ink set, a liquid discharge apparatus, and a liquid discharge method.

### Related Art

An ink-jet printing method is spreading rapidly these days thanks to its simplicity in recording color images and low running costs. In the field of textile printing of fabrics, which has been conventionally performed by an analog method mainly using dyes, an ink-jet printing method has begun to be widely used. In particular, by using an aqueous pigment ink using a pigment as a coloring material, industrial waste water generated by textile printing can be significantly reduced and, together with stock reduction by on-demand printing of the ink-jet method, the ink-jet method is known as an environmentally friendly printing method.

In textile printing using an aqueous pigment ink, the main issues are coloring property, fastness, and texture, and various companies have conducted intensive studies. In addition, an ink-jet ink set including an ink and a pretreatment liquid, which is used for forming an image by attaching the ink to a fabric, has also been proposed.

Japanese Unexamined Patent Application Publication No. 2020-051001 discloses a pretreatment liquid for textile printing which is used together with an ink-jet ink and includes a predetermined content of polysaccharide having an amino group. According to Japanese Unexamined Patent Application Publication No. 2020-051001, blurring of images can be suppressed, and the fastness to wet rubbing can be increased.

Japanese Unexamined Patent Application Publication No. 2021-152091 discloses a treatment liquid for textile printing that is used in contact with an aqueous ink-jet ink composition in a liquid state and includes two species of organic acids at a predetermined mass ratio. According to Japanese Unexamined Patent Application Publication No. 2021-152091, an aqueous ink-jet ink composition can be printed on a treatment liquid for textile printing on a treated fabric so as to be in contact with each other in a liquid state (wet-on-wet).

Japanese Translation of PCT International Application Publication No. JP-T-2021-500437 discloses an ink-jet ink fixing composition including a property modifier, a friction coefficient reducing agent, and a carrier.

Japanese Unexamined Patent Application Publication No. 2020-105304 discloses an ink set for textile printing that includes a combination of a pretreatment agent for textile printing and an aqueous pigment ink, wherein the pretreatment agent includes a hydrophilic silicone resin and water and a predetermined dynamic contact angle with respect to the surface of the hydrophilic silicone resin falls within a predetermined range. According to Japanese Unexamined Patent Application Publication No. 2020-105304, even in ink-jet textile printing using an aqueous pigment ink, it is possible to obtain a printed textile material having an image density that is not inferior to that of a printed textile material obtained by conventional screen textile printing.

However, with regard to the texture, in particular, there is an issue that the texture of the fabric is deteriorated by printing the pigment ink. Therefore, there is a demand for a technique for improving coloring property, fastness, and texture when ink-jet printing is performed on a fabric. Furthermore, when ink-jet printing is performed using a pretreatment liquid, it is also desirable to obtain favorable preservation stability of the pretreatment liquid.

### SUMMARY

An object of the present invention is to provide an ink set that prevents deterioration of the texture when printing is performed by discharging a liquid onto a fabric, obtains desirable coloring property and fastness, and has desirable preservation stability of a pretreatment liquid.

According to an embodiment of the present invention, an ink set for fabric printing includes an aqueous ink and a pretreatment liquid. The aqueous ink includes a pigment. The pretreatment liquid includes an organic acid and an amino-modified silicone. The organic acid has a pKa at 25°C of 2.5 or more and less than 5.0, and a content of the organic acid in the pretreatment liquid is 5% by mass or more and 20% by mass or less. A content of the amino-modified silicone in the pretreatment liquid is 1% by mass or more and less than 15% by mass.

According to an embodiment of the present invention, a liquid discharge apparatus includes a first discharge unit to discharge the above pretreatment liquid onto a fabric, and a second discharge unit to discharge the above aqueous ink onto the fabric.

According to an embodiment of the present invention, a liquid discharge method includes discharging the above pretreatment liquid onto a fabric, and discharging the above aqueous ink onto the fabric.

Embodiments of the present invention provide an ink set that prevents deterioration of the texture when printing is performed by discharging a liquid onto a fabric, obtains desirable coloring property and fastness, and has desirable preservation stability of a pretreatment liquid.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic view of a liquid discharge apparatus according to an embodiment of the present invention; and
FIG. 2 is a schematic view of an ink tank according to an embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

An ink set, a liquid discharge apparatus, and a liquid discharge method according to embodiments of the present invention will be described below with reference to the drawings. It is to be noted that the following embodiments are not limiting the present invention, and other embodiments, any deletion, addition, change, etc. can be made within a scope in which a person skilled in the art can conceive, and any of which is included within the scope of the present invention as long as the effect and feature of the present invention are demonstrated.

### Ink Set

An ink set according to embodiments of the present invention is an ink set for fabric printing including a pretreatment liquid and an aqueous ink. The aqueous ink includes a pigment, and the pretreatment liquid includes an organic acid and an amino-modified silicone. The content of the amino-modified silicone in the pretreatment liquid is 1% by mass or more and less than 15% by mass. The pKa of the organic acid at 25°C is 2.5 or more and less than 5.0, and the content of the organic acid in the pretreatment liquid is 5% by mass or more and 20% by mass or less.

According to embodiments the present invention, an ink set is provided that prevents deterioration of a texture when printing is performed by discharging a liquid onto a fabric, obtains desirable coloring property and fastness, and has desirable preservation stability of a pretreatment liquid.

Hereinafter, the aqueous ink may be referred to as an ink. In the present disclosure, the terms "image forming", "recording", and "printing" are treated as synonymous terms. In addition, the terms "recording media", "media", and "print media" are treated as synonymous terms.

### Pretreatment Liquid

The pretreatment liquid includes an organic acid and an amino-modified silicone and, in addition, may contain water and an organic solvent. The pretreatment liquid may contain a surfactant, a defoamer, a pH adjuster, a preservative and fungicide, a corrosion inhibitor, and the like as appropriate.

An organic solvent, a surfactant, a defoamer, a pH adjuster, a preservative and fungicide, and a corrosion inhibitor may include the same materials as those used for the ink or may include materials used for known treatment liquids. As the materials that can be used for the pretreatment liquid, the materials described for the ink can be used, and therefore, the organic acid and the amino-modified silicone are particularly described here, and the others are omitted.

### Organic Acid

The pKa of the organic acid at 25°C is 2.5 or more and less than 5.0. In the case of less than 2.5, corrosion of a metal member with which the pretreatment liquid comes into contact in the printer is likely to occur. In the case of 5.0 or more, the aggregation action of the ink component, which is the main function of the pretreatment liquid, is weakened, and the coloring property are reduced or blurring of images occurs. The pKa at 25°C is preferably 2.8 or more and 4.8 or less.

Examples of the method for measuring the pKa of the organic acid include, but are not limited to, a titration method. The pKa is the logarithm of the reciprocal of the acid dissociation constant Ka, and the acid dissociation constant takes a value unique to an acid. Therefore, the pKa of the organic acid can be determined by identifying the organic acid. The organic acid can be identified by separating a component from a miscible system using gas chromatography, liquid chromatography, ion chromatography, capillary electrophoresis, or the like, and then using a qualitative analysis method such as mass spectrum, infrared absorption spectrum, or nuclear magnetic resonance (NMR).

Examples of the organic acid include, but are not limited to, malonic acid (pKa = 2.83, 5.69), citric acid (pKa = 2.8), tartaric acid (pKa = 2.98, 4.34), malic acid (pKa = 3.4), formic acid (pKa = 3.74), lactic acid (pKa = 3.8), succinic acid (pKa = 4.16), acetic acid (pKa = 4.8), sorbic acid (pKa = 4.76), butyric acid (pKa = 4.63), and propionic acid (pKa = 4.85). A polyvalent organic acid such as malonic acid has a plurality of acid dissociation constants and thus has a plurality of pKa values, and any one of the pKa values may be 2.5 or more and less than 5.0.

The organic acid is preferably one or more selected from the group consisting of lactic acid, citric acid, and acetic acid, and more preferably one or more selected from the group consisting of lactic acid and citric acid. When lactic acid, citric acid, or acetic acid is used as the organic acid, the fastness is improved, and when lactic acid or citric acid is used, the fastness is further improved.

The content of the organic acid in the pretreatment liquid is 5% by mass or more and 20% by mass or less. In the case of less than 5% by mass, it is difficult to obtain desirable coloring property. More than 20% by mass is not preferable in view of the constitution of the formulation.

The content of the organic acid in the pretreatment liquid is preferably 5% by mass or more and less than 20% by mass, more preferably 8% by mass or more and less than 15% by mass. By satisfying such a range, the coloring property, fastness, and texture of images can be improved, and the preservation stability of the pretreatment liquid can be improved.

### Amino-Modified Silicone

The amino-modified silicone refers to dimethyl silicone in which a part of methyl groups are substituted with amino groups. When the pretreatment liquid includes the amino-modified silicone, the friction coefficient between fibers can be reduced, and the texture of the fabric can be improved. The amino-modified silicone can be used as, for example, a cationic activator.

The amino-modified silicone can be appropriately selected, and as a commercially available product, for example, AMC-900 (manufactured by Nicca Chemical Co., Ltd.), KF-8004, KF-8015, KF-867S, and KF-8005S (manufactured by Shin-Etsu Chemical Co., Ltd.) can be used.

The content of the amino-modified silicone in the pretreatment liquid is 1% by mass or more and less than 15% by mass.

In the case of less than 1% by mass, it is difficult to obtain desirable texture, and in the case of 15% by mass or more, it is difficult to obtain desirable preservation stability of the pretreatment liquid.

The content of the amino-modified silicone in the pretreatment liquid is preferably 5% by mass or more and less than 15% by mass, more preferably 10% by mass or more and less than 15% by mass, and still more preferably 11% by mass or more and 14% by mass or less. In the case of such a range, the texture is improved.

### Ink

The aqueous ink (also referred to as ink) included in the ink set according to embodiments of the present invention includes a pigment, and may further include an organic solvent, a resin, an additive, and the like. The ink set may include one type or a plurality of types of ink, for example, one color or a plurality of colors.

### Organic Solvent

The organic solvent is not particularly limited and water-soluble organic solvents can be used. Examples thereof include, but are not limited to, polyols, ethers such as polyol alkyl ethers and polyol aryl ethers, nitrogen-containing heterocyclic compounds, amides, amines, and sulfur-containing compounds.

Examples of the polyols include, but are not limited to, ethylene glycol, diethylene glycol, 1,2-propanediol, 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol.

Examples of the polyol alkyl ethers include, but are not limited to, ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether.

Examples of the polyol aryl ethers include, but are not limited to, ethylene glycol monophenyl ether and ethylene glycol monobenzyl ether.

Examples of the nitrogen-containing heterocyclic compounds include, but are not limited to, 2-pyrrolidone, N-methyl-2-pyrrolidone, N-hydroxyethyl-2-pyrrolidone, 1,3-dimethyl-2-imidazolidinone, ε-caprolactam, and γ-butyrolactone.

Examples of the amides include, but are not limited to, formamide, N-methylformamide, N,N-dimethylformamide, 3-methoxy-N,N-dimethylpropionamide, and 3-butoxy-N,N-dimethylpropionamide.

Examples of the amines include, but are not limited to, monoethanolamine, diethanolamine, and triethylamine.

Examples of the sulfur-containing compounds include, but are not limited to, dimethylsulfoxide, sulfolane, and thiodiethanol.

Examples of other organic solvents include, but are not limited to, propylene carbonate and ethylene carbonate.

In particular, organic solvents having a boiling point of 250°C or less are preferred, since those organic solvents not only function as a wetting agent but also provide desirable drying property.

Examples of usable organic solvents include, but are not limited to, polyol compounds having 8 or more carbon atoms and glycol ether compounds. Examples of the polyol compounds having 8 or more carbon atoms include, but are not limited to, 2-ethyl-1,3-hexanediol and 2,2,4-trimethyl-1,3-pentanediol.

Examples of the glycol ether compounds include, but are not limited to, polyol alkyl ethers such as ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, and propylene glycol monoethyl ether; and polyol aryl ethers such as ethylene glycol monophenyl ether and ethylene glycol monobenzyl ether.

The polyol compounds having 8 or more carbon atoms and the glycol ether compounds can improve paper-permeability of the ink when paper is used as a recording medium.

The content of the organic solvent in the ink is not particularly limited and can be suitably selected to suit to a particular application, but is preferably 10% by mass or more and 60% by mass or less, more preferably 20% by mass or more and 60% by mass or less, in terms of drying property and discharge reliability of the ink.

### Water

The content of water in the ink is not particularly limited and can be suitably selected to suit to a particular application, but is preferably 10% by mass or more and 90% by mass or less, more preferably 20% by mass or more and 60% by mass or less, in terms of drying property and discharge reliability of the ink.

### Pigment

Examples of usable pigments include, but are not limited to, both inorganic pigments and organic pigments. Each of the pigments may be used alone, or two or more of the pigments may be used in combination. Mixed crystals can also be used as the pigments.

Examples of usable pigments include, but are not limited to, black pigments, yellow pigments, magenta pigments, cyan pigments, white pigments, green pigments, orange pigments, glossy color pigments (e.g., gold pigments and silver pigments), and metallic pigments.

Examples of inorganic pigments include, but are not limited to, titanium oxide, iron oxide, calcium carbonate, barium sulfate, aluminum hydroxide, Barium Yellow, Cadmium Red, Chrome Yellow, and carbon black produced by a known method such as a contact method, a furnace method, and a thermal method.

Examples of the organic pigments include, but are not limited to, azo pigments, polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (e.g., basic dye chelate and acid dye chelate), nitro pigments, nitroso pigments, and aniline black. Among these pigments, those having desirable affinity for solvents are preferred. In addition, hollow resin particles and hollow inorganic particles can also be used.

Examples of pigments used for black-and-white printing include, but are not limited to: carbon blacks (i.e., C.I. Pigment Black 7) such as furnace black, lamp black, acetylene black, and channel black; metals such as copper, iron (i.e., C.I. Pigment Black 11), and titanium oxide; and organic pigments such as aniline black (i.e., C.I. Pigment Black 1).

Examples of pigments used for color printing include, but are not limited to: C.I. Pigment Yellow 1, 3, 12, 13, 14, 17, 24, 34, 35, 37, 42 (Yellow Iron Oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51; C.I. Pigment Red 1, 2, 3, 5, 17, 22, 23, 31, 38, 48:2, 48:2 (Permanent Red 2B(Ca)), 48:3, 48:4, 49:1, 52:2, 53:1, 57:1 (Brilliant Carmine 6B), 60:1, 63:1, 63:2, 64:1, 81, 83, 88, 101 (Red Iron Oxide), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4 (Phthalocyanine Blue), 16, 17:1, 56, 60, and 63; and C.I. Pigment Green 1, 4, 7, 8, 10, 17, 18, and 36.

The content of the colorant in the ink is preferably 0.1% by mass or more and 15% by mass or less, more preferably 1% by mass or more and 10% by mass or less, in terms of improvements in image density, fixability, and discharge stability.

The pigment can be dispersed in the ink by any of the following methods: introducing a hydrophilic functional group to the pigment to make the pigment self-dispersible; covering the surface of the pigment with a resin; and dispersing the pigment by a dispersant.

In the method of introducing a hydrophilic functional group to the pigment to make the pigment self-dispersible, for example, a functional group such as sulfone group and carboxyl group may be introduced to the pigment (e.g., carbon) to make the pigment dispersible in water.

In the method of covering the surface of the pigment with a resin, for example, the pigment may be incorporated in a microcapsule to make the pigment self-dispersible in water. In this case, the pigment may be referred to as a resin-covered pigment. In this case, not all the pigment particles included in the ink should be covered with a resin. It is possible that a part of the pigment particles is not covered with any resin or partially covered with a resin.

In the method of dispersing the pigment by a dispersant, low-molecular dispersants and high-molecular dispersants, represented by known surfactants, may be used.

Examples of usable dispersants include, but are not limited to, anionic surfactants, cationic surfactants, ampholytic surfactants, and nonionic surfactants depending on the property of the pigment.

For example, RT-100 (nonionic surfactant) manufactured by TAKEMOTO OIL & FAT Co., Ltd. and sodium naphthalenesulfonate formalin condensate are preferably used as the dispersant.

Each of the above dispersants may be used alone, or two or more of the dispersants may be used in combination.

### Pigment Dispersion

The ink can be obtained by mixing a pigment with other materials such as water and an organic solvent. The ink can also be obtained by, first, preparing a pigment dispersion by mixing a pigment with water, a dispersant, etc., and thereafter mixing the pigment dispersion with other materials such as water and an organic solvent.

The pigment dispersion can be obtained by mixing water, a pigment, a pigment dispersant, and other components, if any, to disperse the pigment, and adjusting the particle diameter of the pigment. Preferably, the dispersing is performed by a disperser.

The particle diameter of the pigment dispersed in the pigment dispersion is not particularly limited, but the number-based maximum frequency particle diameter is preferably 20 nm or more and 500 nm or less, more preferably 20 nm or more and 150 nm or less, in terms of improvements in dispersion stability of the pigment, discharge stability, and image quality (e.g., image density). The particle diameter of the pigment can be measured using a particle size analyzer (NANOTRAC WAVE-UT151 manufactured by MicrotracBEL Corp.).

The content of the pigment in the pigment dispersion is not particularly limited and can be suitably selected to suit to a particular application, but is preferably 0.1% by mass or more and 50% by mass or less, more preferably 0.1% by mass or more and 30% by mass or less, in terms of desirable discharge stability and enhanced image density.

Preferably, the pigment dispersion is subjected to filtration using a filter or a centrifugal separator to remove coarse particles, followed by degassing.

### Resin

The type of the resin contained in the ink is not particularly limited and can be suitably selected to suit to a particular application. Examples thereof include, but are not limited to, urethane resins, polyester resins, acrylic resins, vinyl acetate resins, styrene resins, butadiene resins, styrene-butadiene resins, vinyl chloride resins, acrylic styrene resins, and acrylic silicone resins.

Resin particles including these resins may also be used. The resin particles may be dispersed in water serving as a dispersion medium to prepare a resin emulsion. The ink can be obtained by mixing the resin emulsion with other materials such as a colorant and an organic solvent. These resin particles may be either synthesized products or commercially available products. The resin particles may include one type or two or more types of resin particles in combination.

The volume average particle diameter of the resin particles is not particularly limited and can be suitably selected to suit to a particular application, but is preferably 10 nm or more and 1,000 nm or less, more preferably 10 nm or more and 200 nm or less, and particularly preferably 10 nm or more and 100 nm or less, in terms of desirable fixability and high image hardness.

The volume average particle diameter can be measured using a particle size analyzer (NANOTRAC WAVE-UT151 manufactured by MicrotracBEL Corp.).

The content of the resin in the ink is not particularly limited and can be suitably selected to suit to a particular application, but is preferably 8% by mass or more and 15% by mass or less, more preferably 8% by mass or more and 12% by mass or less, in terms of fixability and preservation stability of the ink.

The particle size of solid contents in the ink is not particularly limited and can be suitably selected to suit to a particular application. The number-based maximum frequency particle diameter of solid contents in the ink is preferably 20 nm or more and 1,000 nm or less, more preferably 20 nm or more and 150 nm or less, in terms of improvements in discharge stability and image quality (e.g., image density). The solid contents include the resin particles and pigment particles. The particle diameter can be measured using a particle size analyzer (NANOTRAC WAVE-UT151 manufactured by MicrotracBEL Corp.).

These urethane resins and acrylic resins may be used as the resin particles as described above. The types of the urethane resin particles and the acrylic resin particles contained in the ink are not particularly limited and may be suitably selected to suit to a particular application. The resin particles may be dispersed in water serving as a dispersion medium to prepare a resin emulsion. The ink can be obtained by mixing the resin emulsion with other materials such as a colorant and an organic solvent. These resin particles may be either synthesized products or commercially available products.

### Additive

The ink may further contain a surfactant, a defoamer, a preservative and fungicide, a corrosion inhibitor, a pH adjuster, or the like, as appropriate.

### Surfactant

Examples of usable surfactants include, but are not limited to, silicone-based surfactants, fluorine-based surfactants, amphoteric surfactants, nonionic surfactants, and anionic surfactants.

The silicone-based surfactants are not particularly limited and can be suitably selected to suit to a particular application.

In particular, those that do not decompose even at a high pH are preferred. Examples of the silicone-based surfactants include, but are not limited to, side-chain-modified polydimethylsiloxane, both -end-modified polydimethylsiloxane, one-end-modified polydimethylsiloxane, and side-chain- and-both-end-modified polydimethylsiloxane. In particular, those having a polyoxyethylene group or a polyoxyethylene polyoxypropylene group as the modifying group are preferred because of their desirable characteristics as an aqueous surfactant. Examples of the silicone-based surfactants include, but are not limited to, polyether-modified silicone-based surfactants, such as a dimethyl siloxane compound having a polyalkylene oxide structure on a side chain which is bound to Si.

Examples of the fluorine-based surfactants include, but are not limited to, perfluoroalkyl sulfonic acid compounds, perfluoroalkyl carboxylic acid compounds, perfluoroalkyl phosphate compounds, perfluoroalkyl ethylene oxide adducts, and polyoxyalkylene ether polymer compounds having a perfluoroalkyl ether group on a side chain, each of which has weak foaming property. Examples of the perfluoroalkyl sulfonic acid compounds include, but are not limited to, perfluoroalkyl sulfonic acid and perfluoroalkyl sulfonate. Examples of the perfluoroalkyl carboxylic acid compounds include, but are not limited to, perfluoroalkyl carboxylic acid and perfluoroalkyl carboxylate. Examples of the polyoxyalkylene ether polymer compounds having a perfluoroalkyl ether group on a side chain include, but are not limited to, a sulfate of a polyoxyalkylene ether polymer having a perfluoroalkyl ether group on a side chain, and a salt of a polyoxyalkylene ether polymer having a perfluoroalkyl ether group on a side chain. Examples of the counter ions for these fluorine-based surfactants include, but are not limited to, Li, Na, K, NH₄, NH₃CH₂CH₂OH, NH₂(CH₂CH₂OH)₂, and NH(CH₂CH₂OH)₃.

Examples of the amphoteric surfactants include, but are not limited to, laurylaminopropionate, lauryl dimethyl betaine, stearyl dimethyl betaine, and lauryl hydroxyethyl betaine.

Examples of the nonionic surfactants include, but are not limited to, polyoxyethylene alkyl phenyl ethers, polyoxyethylene alkyl esters, polyoxyethylene alkylamines, polyoxyethylene alkylamides, polyoxyethylene propylene block polymers, sorbitan fatty acid esters, polyoxyethylene sorbitan fatty acid esters, and ethylene oxide adducts of acetylene alcohol.

Examples of the anionic surfactants include, but are not limited to, acetate, dodecylbenzene sulfonate, and laurate of polyoxyethylene alkyl ether, and polyoxyethylene alkyl ether sulfate.

Each of the anionic surfactants can be used alone, or two or more of the anionic surfactants may be used in combination.

The silicone-based surfactants are not particularly limited and can be suitably selected to suit to a particular application. Examples thereof include, but are not limited to, side-chain-modified polydimethylsiloxane, both-end-modified polydimethylsiloxane, one-end-modified polydimethylsiloxane, and side-chain-and-both-end-modified polydimethylsiloxane. More specifically, polyether-modified silicone-based surfactants having polyoxyethylene group or polyoxyethylene polyoxypropylene group as the modifying groups are preferred as demonstrating desirable characteristics as an aqueous surfactant.

These surfactants may be either synthesized products or commercially available products. Commercial products are readily available from, for example, BYK-Chemie GmbH, Shin-Etsu Chemical Co., Ltd., Dow Corning Toray Silicone Co., Ltd., Nihon Emulsion Co., Ltd., and Kyoeisha Chemical Co., Ltd.

The polyether-modified silicone-based surfactants are not particularly limited and can be suitably selected to suit to a particular application. Examples thereof include, but are not limited to, a compound represented by the following general formula (S-1) that is a dimethylpolysiloxane having a polyalkylene oxide structure on a side chain which is bound to Si.

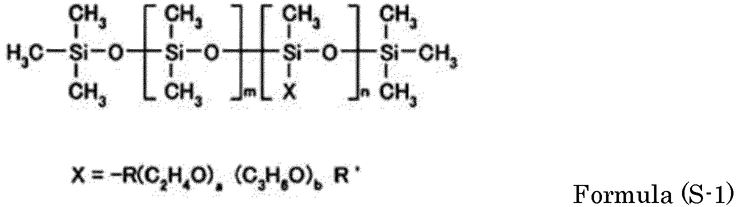

In the general formula (S-1), each of m, n, a, and b independently represents an integer, R represents an alkylene group, and R' represents an alkyl group.

Examples of commercially available products of the polyether-modified silicone-based surfactants include, but are not limited to: KF-618, KF-642, and KF-643 (manufactured by Shin-Etsu Chemical Co., Ltd.); EMALEX-SS-5602 and SS-1906EX (manufactured by Nihon Emulsion Co., Ltd.); FZ-2105, FZ-2118, FZ-2154, FZ-2161, FZ-2162, FZ-2163, and FZ-2164 (manufactured by Dow Corning Toray Silicone Co., Ltd.); BYK-33 and BYK-387 (manufactured by BYK-Chemie GmbH); and TSF4440, TSF4452, and TSF4453 (manufactured by Momentive Performance Materials Inc.).

Preferably, the fluorine-based surfactant is a compound having 2 to 16 fluorine-substituted carbon atoms, more preferably a compound having 4 to 16 fluorine-substituted carbon atoms.

Examples of the fluorine-based surfactant include, but are not limited to, perfluoroalkyl phosphate compounds, perfluoroalkyl ethylene oxide adducts, and polyoxyalkylene ether polymer compounds having a perfluoroalkyl ether group on a side chain. Among these, polyoxyalkylene ether polymer compounds having a perfluoroalkyl ether group on a side chain are preferred for their small foaming property. More specifically, compounds represented by the following general formula (F-1) or (F-2) are preferred as the fluorine-based surfactants.

CF₃CF₂(CF₂CF₂)ₘ-CH₂CH₂O(CH₂CH₂O)ₙH Formula (F-1)

In the general formula (F-1), preferably, m is an integer of 0 to 10 and n is an integer of 0 to 40, for imparting water-solubility to the compound.

CₙF₂ₙ₊₁-CH₂CH(OH)CH₂-O-(CH₂CH₂O)ₐ-Y Formula (F-2)

In the compound represented by the general formula (F-2), Y is H, or in CₘF₂ₘ₊₁, m is an integer of 1 to 6, or in CH₂CH(OH)CH₂-CₘF₂ₘ₊₁, m is an integer of 4 to 6, or in CₚH₂ₚ₊₁, p is an integer of 1 to 19. n is an integer of 1 to 6. a is an integer of 4 to 14.

The fluorine-based surfactants may be commercially available products. Examples of commercially-available fluorine-based surfactants include, but are not limited to: SURFLON S-111, S-112, S-113, S-121, S-131, S-132, S-141, and S-145 (manufactured by Asahi Glass Co., Ltd.); FLUORAD FC-93, FC-95, FC-98, FC-129, FC-135, FC-170C, FC-430, and FC-431 (manufactured by 3M Japan Limited); MEGAFACE F-470, F-1405, and F-474 (manufactured by DIC Corporation); ZONYL TBS, FSP, FSA, FSN-100, FSN, FSO-100, FSO, FS-300, UR, CAPSTONE FS-30, FS-31, FS-3100, FS-34, and FS-35 (manufactured by The Chemours Company); FT-110, FT-250, FT-251, FT-400S, FT-150, and FT-400SW (manufactured by NEOS Company Limited); POLYFOX PF-136A, PF-156A, PF-151N, PF-154, and PF-159 (manufactured by OMNOVA Solutions Inc.); and UNIDYNE DSN-403N (manufactured by Daikin Industries, Ltd.). Among these, for improving printing quality, in particular coloring property, paper permeability, paper wettability, and uniform dying property, FS-3100, FS-34, and FS-300 (manufactured by The Chemours Company), FT-110, FT-250, FT-251, FT-400S, FT-150, and FT-400SW (manufactured by NEOS Company Limited), POLYFOX PF-151N (manufactured by OMNOVA Solutions Inc.), and UNIDYNE DSN-403N (manufactured by Daikin Industries, Ltd.) are particularly preferred.

The content of the surfactant in the ink is not particularly limited and can be suitably selected to suit to a particular application, but is preferably 0.001% by mass or more and 5% by mass or less, more preferably 0.05% by mass or more and 5% by mass or less, for improving wettability and discharge stability and enhancing image quality.

### Defoamer

Examples of the defoamer include, but are not limited to, silicone-based defoamers, polyether-based defoamers, and fatty-acid-ester-based defoamers. Each of the defoamers may be used alone, or two or more of the defoamers may be used in combination. Among these defoamers, silicone-based defoamers are preferable since the silicone-based defoamers have desirable defoaming ability.

### Preservative and Fungicide

Examples of the preservative and fungicide include, but are not limited to, 1,2-benzisothiazoline-3-one.

### Corrosion Inhibitor

Examples of the corrosion inhibitor include, but are not limited to, acid sulphite and sodium thiosulfate.

### pH Adjuster

The pH adjuster is not particularly limited as long as the pH adjuster can adjust the pH to 7 or higher. Examples thereof include, but are not limited to, amines such as diethanolamine and triethanolamine.

### Ink Properties

The properties of the ink are not particularly limited and can be suitably selected to suit to a particular application. As an example, preferred viscosity, surface tension, and pH of the ink are described below.

Preferably, the viscosity of the ink at 25°C is 5 mPa ·s or more and 30 mPa ·s or less, more preferably 5 mPa ·s or more and 25 mPa ·s or less, in terms of improvements in print density and text quality and enhanced discharge performance. The viscosity can be measured by a rotatory viscometer (RE-80L manufactured by Toki Sangyo Co., Ltd.). Measurement can be performed under measurement conditions of 25°C, use of a standard cone rotor (1°34' × R24), a sample liquid volume of 1.2 mL, a rotation speed of 50 rpm, and three minutes.

Preferably, the surface tension of the ink is 35 mN/m or less, more preferably 32 mN/m or less, at 25°C, so that the ink is suitably levelized on a recording medium and the drying time of the ink is shortened.

Preferably, the pH of the ink is from 7 to 12, more preferably from 8 to 11, in terms of prevention of corrosion of metal materials contacting the ink.

### Recording Medium

Examples of the recording medium used for recording include, but are not limited to, plain paper, glossy paper, special paper, cloth, film, OHP sheet, and general-purpose printing paper. According to embodiments of the present invention, a fabric is particularly used. The ink set according to embodiments of the present invention is particularly useful for fabric printing. The fabric can be appropriately selected, and examples thereof include, but are not limited to, a cotton broadcloth and a polyester tropical cloth.

### Liquid Discharge Apparatus and Liquid Discharge Method

Next, a liquid discharge apparatus and a liquid discharge method according to embodiments of the present invention will be described. The liquid discharge apparatus can be used as a recording apparatus, a printing apparatus, an image forming apparatus, an ink-jet recording apparatus, an ink-jet printing apparatus, or the like. The liquid discharge method can be used as a recording method, a printing method, an image forming method, an ink-jet recording method, an ink-jet printing method, or the like.

A liquid discharge apparatus according to embodiments of the present invention is a liquid discharge apparatus that includes the ink set according to embodiments of the present invention, a first discharge unit to discharge the pretreatment liquid onto a fabric, and a second discharge unit to discharge the aqueous ink onto the fabric.

A liquid discharge method according to embodiments of the present invention is a liquid discharge method using the ink set according to embodiments of the present invention and includes a first discharge step of discharging the pretreatment liquid onto a fabric and a second discharge step of discharging the aqueous ink onto the fabric.

In the liquid discharge apparatus and the liquid discharge method according to embodiments of the present invention, it is preferable that, after the pretreatment liquid is discharged onto the fabric, the aqueous ink is discharged without drying and heating to bring the aqueous ink into contact with the pretreatment liquid. Thus, the pretreatment liquid and the aqueous ink can be brought into contact with each other in a liquid state, and the coloring property and texture can be improved.

In the liquid discharge apparatus and the liquid discharge method according to embodiments of the present invention, it is preferable that A:B that is a ratio between an application amount A of the pretreatment liquid and an application amount B of the aqueous ink is 1:3 to 1:0.4. Thus, the coloring property, fastness, and texture can be improved. The application amounts A and B are calculated from the weights of the film before and after the discharge and the area of the discharged image by measuring the weight of the printed material obtained by discharging each of the pretreatment liquid A and the pretreatment liquid B onto an impermeable plastic film.

The application amount is a mass per area to which the pretreatment liquid and the ink are applied. In a case where a liquid discharge apparatus or a liquid discharge method that can set the application amount of the pretreatment liquid and the application amount of the ink is used, the calculation of the application amount by the above-described calculation method may be omitted.

Hereinafter, a recording apparatus and a recording method will be further described as examples.

The ink set according to embodiments of the present invention can be suitably applied to various recording apparatuses, such as printers, facsimile machines, photocopiers, multifunction peripherals (having the functions of printer, facsimile machine, and photocopier), and three-dimensional objects forming apparatuses, employing an ink-jet recording method.

According to embodiments of the present invention, the recording apparatus and the recording method respectively refer to an apparatus that can discharge ink or various treatment liquids onto a recording medium and a method for recording an image on the recording medium using the apparatus. The recording medium refers to an article to which the ink or the various treatment liquids can be attached at least temporarily.

The recording apparatus may further optionally include, in addition to an ink discharge head portion, devices relating to feeding, conveying, and ejecting of the recording medium and other devices referred to as a pretreatment device or an aftertreatment device.

The recording apparatus may further optionally include a heater for use in a heating process and a dryer for use in a drying process. Examples of the heater and the dryer include, but are not limited to, devices for heating and drying the printed surface and the reverse surface of a recording medium. The heater and the dryer are not particularly limited. Examples thereof include, but are not limited to, a fan heater and an infrared heater. The heating process and the drying process may be performed either before, during, or after printing.

In addition, the recording apparatus and the recording method are not limited to those producing merely meaningful visible images such as texts and figures with the ink. For example, the recording apparatus and the recording method can produce patterns like geometric design and three-dimensional images.

The recording apparatus includes both a serial-type device in which the discharge head is moved and a line-type device in which the discharge head is not moved, unless otherwise specified.

Furthermore, in addition to a desktop apparatus, the recording apparatus includes an apparatus that can print images on a wide recording medium such as A0 size and a continuous printer that can use continuous paper reeled up in a roll form as recording media.

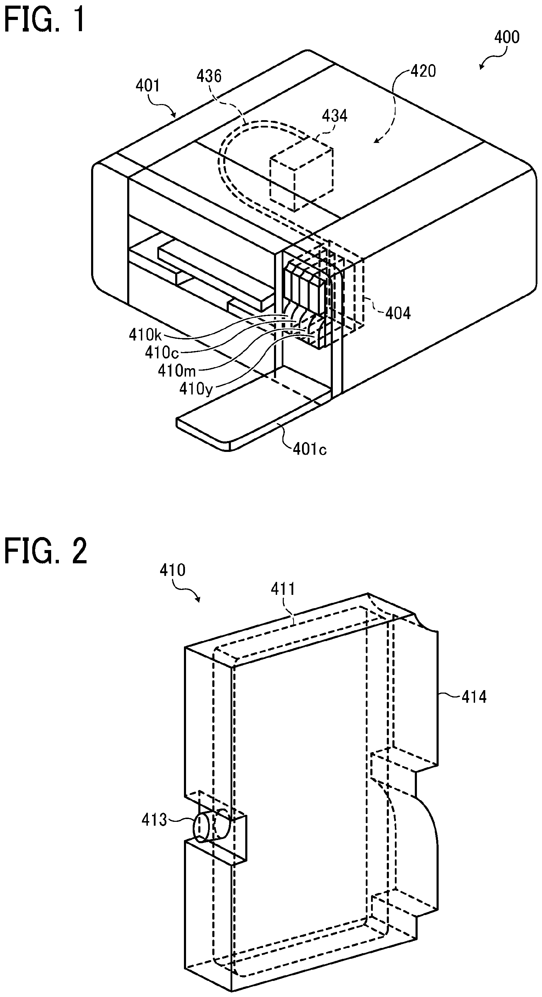

One example of the recording apparatus will be described in detail below with reference to FIGs. 1 and 2. FIG. 1 is a perspective view of a recording apparatus. FIG. 2 is a perspective view of a main tank of the recording apparatus. An image forming apparatus 400, as one example of the recording apparatus, is a serial-type image forming apparatus. A mechanical unit 420 is disposed in a housing 401 of the image forming apparatus 400. Main tanks 410k, 410c, 410m, and 410y for respective colors of black (K), cyan (C), magenta (M), and yellow (Y) (hereinafter each referred to as "main tank 410") each include an ink container 411 formed of a packaging material such as an aluminum laminate film. The ink container 411 is accommodated in a plastic container casing 414. As a result, the main tank 410 is used as an ink cartridge of each color.

A cartridge holder 404 is disposed on the rear side of an opening when a cover 401c of the apparatus body is opened. The main tank 410 is detachably attached to the cartridge holder 404. Thus, each ink discharge outlet 413 of the main tank 410 communicates with a discharge head 434 for each color via a supply tube 436 for each color so that the ink can be discharged from the discharge head 434 onto a recording medium. The pretreatment liquid may be discharged from the discharge head 434, or may be discharged from another discharge head. In addition, the tank or the ink container is appropriately filled with the pretreatment liquid.

### Examples

Further understanding can be obtained by reference to certain specific examples which are provided herein for the purpose of illustration only and are not intended to be limiting. In the descriptions in the following examples, the numbers in parts represent mass ratios in parts, and "%" represents "% by mass", unless otherwise specified.

### Preparation of Pretreatment Liquid

### Preparation of Pretreatment Liquid 1

By using the following pretreatment liquid formulation 1, ion-exchange water is added to obtain 100 parts by mass in total, and the mixture is stirred and filtered through a filter (MINISART manufactured by Sartorius AG) having an average pore diameter of 5 µm to prepare a pretreatment liquid 1.

### Pretreatment Liquid Formulation 1

- Citric acid (manufactured by Kanto Chemical Co., Inc.): 10 parts by mass
- Amino-modified silicone AMC-900 (manufactured by Nicca Chemical Co., Ltd): 53.8 parts by mass
- Propylene glycol: 20 parts by mass
- Ion-exchange water: remaining quantity (total: 100 parts by mass)

### Preparation of Pretreatment Liquids 2 to 16

Pretreatment liquids 2 to 16 are prepared in the same manner as the pretreatment liquid 1, except that the pretreatment liquid formulations are changed to those described in Tables 1 and 2.

In Tables 1 and 2, the details of each component are as follows.
- Lactic acid (manufactured by Kanto Chemical Co., Inc.)
- Acetic acid (manufactured by FUJIFILM Wako Pure Chemical Corporation)
- Malic acid (manufactured by FUJIFILM Wako Pure Chemical Corporation)
- Calcium nitrate tetrahydrate (manufactured by FUJIFILM Wako Pure Chemical Corporation)
- Silicone activator KF-96A-100CS (manufactured by Shin-Etsu Chemical Co., Ltd.)

The requirements of the pretreatment liquid in Tables 1 and 2 are used for explaining whether the pretreatment liquid satisfies the desirable requirements. In Tables 1 and 2, the double circle represents "excellent", the circle represents "good", the triangle represents "average", the cross represents "poor", and the horizontal line represents "none". The pretreatment liquids with the cross correspond to the pretreatment liquids used in Comparative Examples.

**Table 1**

| | | | | PRETREATMENT LIQUID NO. | | | | | | | |
|---|---|---|---|---|---|---|---|---|---|---|---|
| | | | | 1 | 2 | 3 | 4 | 5 | 6 | 7 | 8 |
| FORMULATION | ORGANIC ACID | LACTIC ACID | pKa=3.8 | | | 8 | | | | | |
| | | ACETIC ACID | pKa=4.8 | | | | 10 | | | | |
| | | CITRIC ACID | pKa=2.8 | 10 | 10 | 8 | | 10 | 10 | | 10 |
| | | MALIC ACID | pKa=3.4 | | | | | | | 10 | |
| | METALLIC SALT | CALCIUM NITRATE TETRAHYDRATE | | | | | | | | | |
| | HUMECTANT | PROPYLENE GLYCOL | | 20 | 10 | 8 | 20 | 10 | 8 | 20 | 10 |
| | | TRIETHYLENE GLYCOL | | | 3 | 4 | | 3 | 4 | | 3 |
| | | GLYCERIN | | | 5 | 6 | | 5 | 6 | | 5 |
| | CATIONIC ACTIVATOR | AMC-900 (AMINO-MODIFIED SILICONE) ACTIVE COMPONENT | | 14 | | | 14 | 9 | 6 | 14 | 4 |
| | | KF-8004 (AMINO-MODIFIED SILICONE) ACTIVE COMPONENT | | | 11 | | | | | | |
| | | KF-8005S (AMINO-MODIFIED SILICONE) ACTIVE COMPONENT | | | | 14 | | | | | |
| | ACTIVATOR | KF-96A-100CS | DIMETHYL SILICONE ACTIVE COMPONENT | | | | | | | | |
| | SOLVENT | WATER | | REMAINING QUANTITY | REMAINING QUANTITY | REMAINING QUANTITY | REMAINING QUANTITY | REMAINING QUANTITY | REMAINING QUANTITY | REMAINING QUANTITY | REMAINING QUANTITY |
| | TOTAL | | | 100 | 100 | 100 | 100 | 100 | 100 | 100 | 100 |
| REQUIREMENTS OF PRETREATMENT LIQUID | | | TYPE OF ACID | ⊚ | ⊚ | ⊚ | ○ | ⊚ | ⊚ | ○ | ⊚ |
| | | | ADDITIVE AMOUNT OF ACID | ⊚ | ⊚ | ⊚ | ⊚ | ⊚ | ⊚ | ⊚ | ⊚ |
| | | | TYPE OF ACTIVATOR | ⊚ | ⊚ | ⊚ | ⊚ | ⊚ | ⊚ | ⊚ | ⊚ |
| | | | ADDITIVE AMOUNT OF ACTIVATOR | ⊚ | ⊚ | ⊚ | ⊚ | ○ | ○ | ⊚ | △ |
| | | | COMBINATION OF ACTIVATOR AND FLOCCULANT | ○ | ○ | ○ | ○ | ○ | ○ | ○ | ○ |

**Table 2**

| | | | | PRETREATMENT LIQUID NO. | | | | | | | |
|---|---|---|---|---|---|---|---|---|---|---|---|
| | | | | 9 | 10 | 11 | 12 | 13 | 14 | 15 | 16 |
| FORMULATION | ORGANIC ACID | LACTIC ACID | pKa=3.8 | | 20 | | | | | | |
| | | ACETIC ACID | pKa=4.8 | | | | | | | | |
| | | CITRIC ACID | pKa=2.8 | 10 | | 5 | | 10 | 3 | 10 | 15 |
| | | MALIC ACID | pKa=3.4 | | | | | | | | |
| | METALLIC SALT | CALCIUM NITRATE TETRAHYDRATE | | | | | 15 | | | | |
| | HUMECTANT | PROPYLENE GLYCOL | | 8 | 20 | 20 | 10 | 10 | 10 | 10 | 10 |
| | | TRIETHYLENE GLYCOL | | 4 | | | 3 | 3 | 3 | 3 | 3 |
| | | GLYCERIN | | 6 | | | 5 | 5 | 5 | 5 | 5 |
| | CATIONIC ACTIVATOR | AMC-900 (AMINO-MODIFIED SILICONE) ACTIVE COMPONENT | | 1 | 1 | 1 | 14 | | 14 | | 18 |
| | | KF-8004 (AMINO-MODIFIED SILICONE) ACTIVE COMPONENT | | | | | | | | | |
| | | KF-8005S (AMINO-MODIFIED SILICONE) ACTIVE COMPONENT | | | | | | | | | |
| | ACTIVATOR | KF-96A-100CS | DIMETHYL SILICONE ACTIVE COMPONENT | | | | | 14 | | | |
| | SOLVENT | WATER | | REMAINING QUANTITY | REMAINING QUANTITY | REMAINING QUANTITY | REMAINING QUANTITY | REMAINING QUANTITY | REMAINING QUANTITY | REMAINING QUANTITY | REMAINING QUANTITY |
| | TOTAL | | | 100 | 100 | 100 | | | | | |
| REQUIREMENTS OF PRETREATMENT LIQUID | | | TYPE OF ACID | ⊚ | ⊚ | ⊚ | × | ⊚ | ⊚ | ⊚ | ⊚ |
| | | | ADDITIVE AMOUNT OF ACID | ⊚ | ○ | ○ | × | ⊚ | × | ⊚ | ⊚ |
| | | | TYPE OF ACTIVATOR | ⊚ | ⊚ | ⊚ | ○ | × | ○ | - | - |
| | | | ADDITIVE AMOUNT OF ACTIVATOR | △ | △ | △ | ⊚ | ⊚ | ⊚ | × | × |
| | | | COMBINATION OF ACTIVATOR AND FLOCCULANT | ○ | ○ | ○ | × | ○ | ○ | - | - |

### Preparation of Ink

### Manufacturing of Black Pigment Dispersion

In a flask, 11.2 g of styrene, 2.8 g of acrylic acid, 12 g of lauryl methacrylate, 4 g of polyethylene glycol methacrylate, 4 g of styrene macromer, and 0. 4 g of mercaptoethanol are mixed, and the mixture is heated to 65°C. Next, the mixed solution containing 100.8 g of styrene, 25.2 g of acrylic acid, 108 g of lauryl methacrylate, 36 g of polyethylene glycol methacrylate, 60 g of hydroxyethyl methacrylate, 36 g of styrene macromer, 3.6 g of mercaptoethanol, 2.4 g of azobis methylvaleronitrile, and 18 g of methyl ethyl ketone is dropped in the flask over a period of 2.5 hours. Then, the mixed solution containing 0.8 g of azobis methylvaleronitrile and 18 g of methyl ethyl ketone is dropped in the flask over a period of 0.5 hours. Then, after aging at 65°C for 1 hour, 0. 8 g of azobismethylvaleronitrile is added, and the mixture is further aged for 1 hour to carry out the reaction. After the completion of the reaction, 364 g of methyl ethyl ketone is added into the flask to obtain 800 g of a polymer solution A having a solid content concentration of 50%. Subsequently, 28 g of the polymer solution A, 42 g of carbon black (BLACK PEARLS 1000 manufactured by Cabot Corporation), 13. 6 g of 1 mol/L potassium hydroxide aqueous solution, 20 g of methyl ethyl ketone, and 13.6 g of water are sufficiently stirred, and then kneaded with a rolling mill to obtain a paste. The obtained paste is put into 200 g of pure water and sufficiently stirred, then methyl ethyl ketone is removed with an evaporator, and the resultant is subjected to pressure filtration with a polyvinylidene fluoride membrane filter having an average pore diameter of 5 µm. Then, the water amount is adjusted so that the solid content concentration becomes 20%, and a black pigment dispersion 1 having a solid content concentration of 20% is obtained.

### Preparation of Ink 1

By using the following ink formulation 1, ion-exchange water is added to obtain 100 parts by mass in total, and the mixture is stirred and filtered through a filter (MINISART manufactured by Sartorius AG) having an average pore diameter of 5 µm to prepare an ink 1.

### Ink Formulation 1

- Black pigment dispersion described above: 20 parts by mass
- Urethane resin W-6110 (manufactured by Mitsui Chemicals, Inc., solid content concentration: 30%, glass transition temperature: -20°C): 33.3 parts by mass
- SAG503A (manufactured by Nissin Chemical Industry Co., Ltd., silicone-based surfactant, HLB value: 11): 0.1 parts by mass
- Propylene glycol: 20 parts by mass
- PROXEL LV (preservative and fungicide manufactured by Avecia): 0.1 parts by mass
- Ion-exchange water: remaining quantity (total: 100 parts by mass) Preparation of Inks 2 to 4

Inks 2 to 4 are prepared in the same manner as Ink 1, except that the ink formulation is changed to that described in Table 3.

In Table 3, the details of each component are as follows.
- Urethane resin TAKELAC W-6110 (manufactured by Mitsui Chemicals, Inc., solid content concentration: 30%, glass transition temperature: -20°C)
- Acrylic resin Nikasol FX-2033 (Nippon Carbide Industries Co., Inc., solid content concentration: 30%, glass transition temperature: 8°C)
- Urethane resins SF150 (Super Flex 150 manufactured by DKS Co. Ltd., solid content concentration: 30%, glass transition temperature: 40°C)
- PROXEL LV (preservative and fungicide manufactured by Avecia)
- SAG503A (manufactured by Nissin Chemical Industry Co., Ltd., siloxane-based surfactant)

**Table 3**

| | | | INK NO. | | | |
|---|---|---|---|---|---|---|
| | | | 1 | 2 | 3 | 4 |
| COLORANT | PIGMENT DISPERSION | BLACK PIGMENT DISPERSION 1 | 20 | 20 | 20 | 20 |
| RESIN | URETHANE RESIN | W-6110 (Tg -20°C, SOLID CONTENT 30%) | 33.3 | | | |
| | ACRYLIC RESIN | FX-3750 (Tg -30°C, SOLID CONTENT 30%) | | | 33.3 | |
| | URETHANE RESIN | SF150 (Tg 40°C, SOLID CONTENT 30%) | | 33.3 | | |
| | ACRYLIC RESIN | FX-2033 (Tg 8°C, SOLID CONTENT 30%) | | | | 33.3 |
| HUMECTANT | PROPYLENE GLYCOL | | 20 | 10 | 8 | 10 |
| | TRIETHYLENE GLYCOL | | | 3 | 4 | 3 |
| | GLYCERIN | | | 5 | 6 | 5 |
| ADDITIVE | CORROSION INHIBITOR | LV | 0.1 | 0.1 | 0.1 | 0.1 |
| | SURFACTANT | SAG503A | 0.1 | 0.1 | 0.1 | 0.1 |
| SOLVENT | WATER | | REMAINING QUANTITY | REMAINING QUANTITY | REMAINING QUANTITY | REMAINING QUANTITY |
| TOTAL | | | 100 | 100 | 100 | 100 |

### Examples 1 to 17 and Comparative Examples 1 to 5

Ri100 (manufactured by Ricoh Company, Ltd.), which is a direct to garment (DTG) printer, is used to prepare a printed material. The ink tank mounted on the ink-jet printer described above is filled with the pretreatment liquid and the ink obtained above. The pretreatment liquid is printed on a cotton broadcloth (manufactured by Shikisensha Co., Ltd.) and a polyester tropical cloth (manufactured by Teijin Limited) at an adhesion amount of 10 g/m², and then immediately the black ink is printed thereon at an adhesion amount of 20 g/m². Thereafter, the cotton cloth and the polyester cloth are dried at 160°C and 130°C, respectively, for 5 minutes using a thermostatic bath to prepare a printed material.

The ink sets used in Examples and Comparative Examples are described in Tables 4 to 6 below.

### Evaluation

The printed materials prepared in Examples and Comparative Examples are evaluated for coloring property, fastness, texture, and preservation stability of the pretreatment liquid. Tables 4 to 6 describe the results.

The state of contact between the pretreatment liquid and the ink in Example 17 is described as "the ink is applied to the dried pretreatment layer". In Example 17, drying is performed after printing of the pretreatment liquid, and then printing of the ink and drying are performed. Specifically, in Example 17, after the pretreatment liquid is printed, the cotton cloth and the polyester cloth are dried at 160°C and 130°C, respectively, for 5 minutes using a thermostatic bath and, after the black ink is printed, the cloths are dried under the same conditions to prepare printed materials.

### Coloring Property

The density of the printed material prepared using the ink-jet printer is measured with X-RITE, which is a colorimeter (manufactured by X-Rite, Inc.) to evaluate the coloring property. The evaluation criteria are as follows. The triangle or higher indicates acceptable.

### Evaluation Criteria

Circle: the black density is 1.4 or more
Triangle: the black density is 1.25 or more and less than 1.4
Cross: the black density is less than 1.25

### Fastness

The printed material prepared using the ink-jet printer is subjected to a wet rubbing fastness test in accordance with JIS L 0801. The evaluation criteria are as follows. The triangle or higher indicates acceptable.

### Evaluation Criteria

Double circle: the fastness to wet rubbing is grade 5
Circle: the fastness to wet rubbing is grade 4 or higher and lower than grade 5
Triangle: the fastness to wet rubbing is grade 3 or higher and lower than grade 4
Cross: the fastness to wet rubbing is less than grade 3

### Texture

The printed material prepared using the ink-jet printer is cut into a square of 85 mm, and the bending resistance is measured using Handle-O-Meter (product name: HOM-200, manufactured by Daiei Kagaku Seiki MFG. Co., Ltd.). The evaluation criteria are as follows. The triangle or higher indicates acceptable.

### Evaluation Criteria

Double circle: the bending resistance is less than 20 g
Circle: the bending resistance is 20 g or more and less than 35 g
Triangle: the bending resistance is 35 g or more and less than 50 g
Cross: the bending resistance is 50 g or more
Preservation Stability of Pretreatment Liquid

Each pretreatment liquid is placed in a polyethylene vessel, sealed, and preserved at 60°C for one week. The viscosity at 25°C is measured before and after the preservation, and the change rate from the initial viscosity is determined so that the preservation stability is evaluated. The evaluation criteria are as follows. The circle indicates a practically usable level.

The viscosity at which the change rate reaches a maximum is evaluated for each pretreatment liquid. The viscosity of the pretreatment liquid is measured by a cone-plate rotational viscometer, VISCOMETER TVE-22L (manufactured by Toki Sangyo Co., Ltd.) using a cone rotor (1°34' x R24) at a rotational speed of 50 rpm and with constant-temperature cyclic water at a temperature of 25°C.

### Evaluation Criteria

Circle: the change rate is 0% or more and 20% or less
Cross: the change rate exceeds 20%

**Table 4**

| EXAMPLE NO. | | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 |
|---|---|---|---|---|---|---|---|---|---|---|---|
| PRETREATMENT LIQUID NO. | | | 1 | 2 | 3 | 4 | 5 | 6 | 7 | 8 | 9 |
| INK NO. | | | 1 | 1 | 1 | 1 | 1 | 1 | 1 | 1 | 1 |
| CONTACT STATE BETWEEN PRETREATMENT LIQUID AND INK | | | BOTH LIQUID | BOTH LIQUID | BOTH LIQUID | BOTH LIQUID | BOTH LIQUID | BOTH LIQUID | BOTH LIQUID | BOTH LIQUID | BOTH LIQUID |
| APPLICATION AMOUNT OF PRETREATMENT LIQUID : APPLICATION AMOUNT OF INK | | | 1:2 | 1:2 | 1:2 | 1:2 | 1:2 | 1:2 | 1:2 | 1:2 | 1:2 |
| EVALUATION RESULT | COLORING PROPERTY | BLACK SOLID IMAGE OD | ○ | ○ | ○ | ○ | ○ | ○ | ○ | ○ | ○ |
| | FASTNESS | FASTNESS TO WET RUBBING | ⊚ | ⊚ | ⊚ | ○ | ⊚ | ⊚ | △ | ⊚ | ⊚ |
| | TEXTURE | BENDING RESISTANCE | ⊚ | ⊚ | ⊚ | ⊚ | ○ | ○ | ⊚ | △ | △ |
| | PRESERVATION STABILITY OF PRETREATMENT LIQUID | CHANGE RATE IN VISCOSITY AFTER PRESERVATION FOR 1 WEEK AT 60°C | ○ | ○ | ○ | ○ | ○ | ○ | ○ | ○ | ○ |

**Table 5**

| EXAMPLE NO. | | | EXAMPLE 10 | EXAMPLE 11 | EXAMPLE 12 | EXAMPLE 13 | EXAMPLE 14 | EXAMPLE 15 | EXAMPLE 16 | EXAMPLE 17 |
|---|---|---|---|---|---|---|---|---|---|---|
| PRETREATMENT LIQUID NO. | | | 10 | 11 | 1 | 1 | 1 | 1 | 1 | 1 |
| INK NO. | | | 1 | 1 | 2 | 3 | 4 | 1 | 1 | 1 |
| CONTACT STATE BETWEEN PRETREATMENT LIQUID AND INK | | | BOTH LIQUID | BOTH LIQUID | BOTH LIQUID | BOTH LIQUID | BOTH LIQUID | BOTH LIQUID | BOTH LIQUID | * |
| APPLICATION AMOUNT OF PRETREATMENT LIQUID : APPLICATION AMOUNT OF INK | | | 1:2 | 1:2 | 1:2 | 1:2 | 1:2 | 1:4 | 1:03 | 1:2 |
| EVALUATION RESULT | COLORING PROPERTY | BLACK SOLID IMAGE OD | ○ | ○ | ○ | ○ | ○ | △ | ○ | △ |
| | FASTNESS | FASTNESS TO WET RUBBING | ⊚ | ⊚ | △ | ○ | △ | ⊚ | △ | ⊚ |
| | TEXTURE | BENDING RESISTANCE | △ | △ | △ | △ | △ | △ | ⊚ | △ |
| | PRESERVATION STABILITY OF PRETREATMEN T LIQUID | CHANGE RATE IN VISCOSITY AFTER PRESERVATION FOR 1 WEEK AT 60°C | ○ | ○ | ○ | ○ | ○ | ○ | ○ | ○ |

| | | | | | | | | | | |
|---|---|---|---|---|---|---|---|---|---|---|
| *INK IS APPLIED TO DRIED PRETREATMENT LAYER | | | | | | | | | | |

**Table 6**

| EXAMPLE NO. | | | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 |
|---|---|---|---|---|---|---|---|
| PRETREATMENT LIQUID NO. | | | 12 | 13 | 14 | 15 | 16 |
| INK NO. | | | 1 | 1 | 1 | 1 | 1 |
| CONTACT STATE BETWEEN PRETREATMENT LIQUID AND INK | | | BOTH LIQUID | BOTH LIQUID | BOTH LIQUID | BOTH LIQUID | BOTH LIQUID |
| APPLICATION AMOUNT OF PRETREATMENT LIQUID : APPLICATION AMOUNT OF INK | | | 1:2 | 1:2 | 1:2 | 1:2 | 1:2 |
| EVALUATION RESULT | COLORING PROPERTY | BLACK SOLID IMAGE OD | ○ | ○ | × | ○ | ○ |
| | FASTNESS | FASTNESS TO WET RUBBING | × | ⊚ | ⊚ | ⊚ | △ |
| | TEXTURE | BENDING RESISTANCE | ⊚ | × | ⊚ | × | ⊚ |
| | PRESERVATION STABILITY OF PRETREATMENT LIQUID | CHANGE RATE IN VISCOSITY AFTER PRESERVATION FOR 1 WEEK AT 60°C | × | ○ | ○ | ○ | × |

Aspects of the present invention provide, for example, the following.

### First Aspect

According to a first aspect, an ink set for fabric printing includes an aqueous ink and a pretreatment liquid. The aqueous ink includes a pigment. The pretreatment liquid includes an organic acid and an amino-modified silicone. The organic acid has a pKa at 25°C of 2.5 or more and less than 5.0, a content of the organic acid in the pretreatment liquid being 5% by mass or more and 20% by mass or less. A content of the amino-modified silicone in the pretreatment liquid is 1% by mass or more and less than 15% by mass.

### Second Aspect

According to a second aspect, in the ink set of the first aspect, the content of the amino-modified silicone in the pretreatment liquid is 5% by mass or more and less than 15% by mass.

### Third Aspect

According to a third aspect, in the ink set of the first aspect, the content of the amino-modified silicone in the pretreatment liquid is 10% by mass or more and less than 15% by mass.

### Fourth Aspect

According to a fourth aspect, in the ink set of any one of the first aspect to the third aspect, the organic acid includes at least one member selected from the group consisting of lactic acid, citric acid, and acetic acid.

### Fifth Aspect

According to a fifth aspect, in the ink set of any one of the first aspect to the third aspect, the organic acid includes at least one member selected from the group consisting of lactic acid and citric acid.

### Sixth Aspect

According to a sixth aspect, a liquid discharge apparatus includes a first discharge unit containing a pretreatment liquid to discharge the pretreatment liquid onto a fabric, and a second discharge unit containing an aqueous ink to discharge the aqueous ink onto the fabric. The aqueous ink includes a pigment. The pretreatment liquid includes an organic acid and an amino-modified silicone. The organic acid has a pKa at 25°C of 2.5 or more and less than 5.0, a content of the organic acid in the pretreatment liquid being 5% by mass or more and 20% by mass or less. A content of the amino-modified silicone in the pretreatment liquid is 1% by mass or more and less than 15% by mass.

### Seventh Aspect

According to a seventh aspect, in the liquid discharge apparatus of the sixth aspect, the content of the amino-modified silicone in the pretreatment liquid is 5% by mass or more and less than 15% by mass.

### Eighth Aspect

According to an eighth aspect, in the liquid discharge apparatus of the sixth aspect or the seventh aspect, the organic acid includes at least one member selected from the group consisting of lactic acid, citric acid, and acetic acid.

### Ninth Aspect

According to a ninth aspect, in the liquid discharge apparatus of any one of the sixth aspect to the eighth aspect, after the pretreatment liquid is discharged onto the fabric, the aqueous ink is discharged without drying and heating to bring the aqueous ink into contact with the pretreatment liquid.

### Tenth Aspect

According to a tenth aspect, in the liquid discharge apparatus of any one of the sixth aspect to the ninth aspect, a ratio A:B between an application amount A of the pretreatment liquid and an application amount B of the aqueous ink is 1:3 to 1:0.4.

### Eleventh Aspect

According to an eleventh aspect, a liquid discharge method includes discharging a pretreatment liquid onto the fabric, and discharging an aqueous ink onto the fabric. The aqueous ink includes a pigment. The pretreatment liquid includes an organic acid and an amino-modified silicone. The organic acid has a pKa at 25°C of 2.5 or more and less than 5.0, a content of the organic acid in the pretreatment liquid being 5% by mass or more and 20% by mass or less. A content of the amino-modified silicone in the pretreatment liquid is 1% by mass or more and less than 15% by mass.

### Twelfth Aspect

According to a twelfth aspect, in the liquid discharge method of the eleventh aspect, after the pretreatment liquid is discharged onto the fabric, the aqueous ink is discharged without drying and heating to bring the aqueous ink into contact with the pretreatment liquid.

### Thirteenth Aspect

According to a thirteenth aspect, in the liquid discharge method of the eleventh aspect or the twelfth aspect, a ratio A:B between an application amount A of the pretreatment liquid and an application amount B of the aqueous ink is 1:3 to 1:0.4.

### Fourteenth Aspect

According to a fourteenth aspect, in the liquid discharge method of any one of the eleventh aspect to the thirteenth aspect, the content of the amino-modified silicone in the pretreatment liquid is 5% by mass or more and less than 15% by mass.

### Fifteenth Aspect

According to a fifteenth aspect, in the liquid discharge method of any one of the eleventh aspect to the fourteenth aspect, the organic acid includes at least one member selected from the group consisting of lactic acid, citric acid, and acetic acid.

Any one of the above-described operations may be performed in various other ways, for example, in an order different from the one described above.

## Claims

1. An ink set for fabric printing, the ink set comprising:
an aqueous ink including a pigment; and
a pretreatment liquid including:
an organic acid having a pKa at 25°C of 2.5 or more and less than 5.0, a content of the organic acid in the pretreatment liquid being 5% by mass or more and 20% by mass or less; and
an amino-modified silicone, a content of the amino-modified silicone in the pretreatment liquid being 1% by mass or more and less than 15% by mass.

2. The ink set according to claim 1, wherein the content of the amino-modified silicone in the pretreatment liquid is 5% by mass or more and less than 15% by mass.

3. The ink set according to claim 1, wherein the content of the amino-modified silicone in the pretreatment liquid is 10% by mass or more and less than 15% by mass.

4. The ink set according to any one of claims 1 to 3, wherein the organic acid includes at least one member selected from the group consisting of lactic acid, citric acid, and acetic acid.

5. The ink set according to any one of claims 1 to 3, wherein the organic acid include at least one member selected from the group consisting of lactic acid and citric acid.

6. Aliquid discharge apparatus (400) comprising:
a first discharge unit (434) containing a pretreatment liquid to discharge the pretreatment liquid onto a fabric, the pretreatment liquid including:
an organic acid having a pKa at 25°C of 2.5 or more and less than 5.0, a content of the organic acid in the pretreatment liquid being 5% by mass or more and 20% by mass or less; and
an amino-modified silicone, a content of the amino-modified silicone in the pretreatment liquid being 1% by mass or more and less than 15% by mass; and
a second discharge unit (434) containing an aqueous ink to discharge the aqueous ink onto the fabric, the aqueous ink including a pigment.

7. The liquid discharge apparatus (400) according to claim 6, wherein the content of the amino-modified silicone in the pretreatment liquid is 5% by mass or more and less than 15% by mass.

8. The liquid discharge apparatus (400) according to claim 6 or 7, wherein the organic acid includes at least one member selected from the group consisting of lactic acid, citric acid, and acetic acid.

9. The liquid discharge apparatus (400) according to any one of claims 6 to 8, wherein, after the pretreatment liquid is discharged onto the fabric, the aqueous ink is discharged without drying and heating to bring the aqueous ink into contact with the pretreatment liquid.

10. The liquid discharge apparatus (400) according to any one of claims 6 to 10, wherein a ratio A:B between an application amount A of the pretreatment liquid and an application amount B of the aqueous ink is 1:3 to 1:0.4.

11. A liquid discharge method comprising:
discharging a pretreatment liquid onto a fabric, the pretreatment liquid including:
an organic acid having a pKa at 25°C of 2.5 or more and less than 5.0, a content of the organic acid in the pretreatment liquid being 5% by mass or more and 20% by mass or less; and
an amino-modified silicone, a content of the amino-modified silicone in the pretreatment liquid being 1% by mass or more and less than 15% by mass; and
discharging an aqueous ink onto the fabric, the aqueous ink including a pigment.

12. The liquid discharge method according to claim 11, wherein, after the pretreatment liquid is discharged onto the fabric, the aqueous ink is discharged without drying and heating to bring the aqueous ink into contact with the pretreatment liquid.

13. The liquid discharge method according to claim 11 or 12, wherein a ratio A:B between an application amount A of the pretreatment liquid and an application amount B of the aqueous ink is 1:3 to 1:0.4.

14. The liquid discharge method according to any one of claims 11 to 13, wherein the content of the amino-modified silicone in the pretreatment liquid is 5% by mass or more and less than 15% by mass.

15. The liquid discharge method according to any one of claims 11 to 14, wherein the organic acid includes at least one member selected from the group consisting of lactic acid, citric acid, and acetic acid.
